# FASCICULE DE BREVET EUROPEEN

(11) **EP 1 847 369 B1**
(45) Date de publication et mention de la délivrance du brevet: **31.12.2008**
(21) Numéro de dépôt: 07106474.5
(22) Date de dépôt: 19.04.2007
(51) Int. Cl.: B29C 37/00, B29C 33/42, A61F 2/12

(54) **Procédé de fabrication de dispositifs medicaux implantables à surface textureé**
Herstellungsverfahren implantierbarer medizinischer Vorrichtungen mit strukturierter Oberfläche
Method of manufacturing implantable medical devices with textured surface

(30) Priorité: 21.04.2006 FR 0603568
(43) Date de publication de la demande: 24.10.2007
(73) Titulaire: Cereplas, 59267 Proville (FR)
(72) Inventeur: Leleu, David, 62860 Bourlon (FR)
(74) Mandataire: Hennion, Jean-Claude

(56) Documents cités:
- US-A- 5 354 338
- US-A- 5 965 076
- US-B1- 6 284 856

## Description

La présente invention concerne le domaine de fabrication de dispositifs médicaux implantables.

Plus précisément l'invention a pour objet un procédé de fabrication d'un dispositif médical implantable en polymère présentant une surface rugueuse (dite texturée) au moyen d'un moule dont la surface servant de réplique négative audit dispositif a été texturée par grenaillage.

La pose de tout implant conduit à la formation d'une capsule fibreuse autour de celui-ci. Cette réaction d'autoprotection de l'organisme est normale et vise à isoler, au moyen d'une membrane, le corps étranger des tissus vivants environnants. Dans certains cas, cette membrane s'épaissit et se rétracte formant alors une capsule fibreuse rétractile autour de l'implant, complication sévère qui peut aboutir au retrait de l'implant.

Différents procédés de texturation de la surface externe d'un implant sont connus à ce jour; certains visent à texturer directement la surface d'un implant, d'autres visent à fabriquer un implant à partir d'un moule dont une des surfaces a été texturée par divers moyens.

Les procédés de la première catégorie consistent à utiliser des particules solides mises en contact avec un polymère non réticulé. Ces particules sont ensuite détruites après réticulation par évaporation ou dissolution laissant les pores libres dans le polymère et créant ainsi l'aspect texturé, comme décrit dans les brevets US-A-4.859.712 et 4.889.744. Il est également possible de tamponner la matière avant réticulation totale à l'aide d'un support texturé (US-A-4.960.425). On connait également un procédé qui permet de créer, à l'aide d'un champ électrique, une région riche en bulles dans de la silicone, région qui peut être affleurante et ainsi créer une texturation de surface.

Parmi les procédés de la deuxième catégorie, certains font appel à des techniques d'irradiation de la surface interne de la cavité d'un moule par des particules atomiques, tel que celui décrit dans le document US-A-5.965.076 ou à des techniques de gravure laser, chimique ou manuelle (US-A-5.002.572). D'autres privilégient la fixation de globules texturés ou de filaments sur le moule, comme il est question dans le brevet US-A-5.354.338.

La présente invention a pour but de proposer un nouveau procédé de fabrication d'un dispositif médical implantable en polymère présentant une surface texturée (rugueuse) afin d'en améliorer l'intégration dans les tissus vivants environnants suite à son implantation. La surface externe dudit dispositif est rendue rugueuse, selon l'invention, au moyen d'un moule dont la surface servant de réplique négative audit dispositif a été texturée par grenaillage au corindon. C'est un procédé relativement simple et qui, en comparaison avec le brevet US-A-5.354.338, ne nécessite pas l'intégration d'éléments supplémentaires sur le moule.

A cet effet, l'invention a pour objet un procédé de fabrication d'un dispositif médical implantable en polymère comprenant les étapes suivantes :
a) fournir un moule en un matériau compatible avec l'utilisation médicale, dont une des surfaces est destinée à former la réplique négative dudit dispositif;
b) texturer ladite surface du moule par grenaillage avec des particules solides de matière et taille définies, à pression définie;
c) appliquer un polymère sur la surface texturée dudit moule, par trempage, pressage ou injection;
d) réticuler ledit polymère appliqué sur le moule;
e) démouler le polymère réticulé dont la surface en contact avec le moule a été texturée;
f) fabriquer un dispositif médical implantable à partir dudit polymère réticulé et texturé.

Par extension de son sens habituel, qui est de soumettre une fibre synthétique à différents traitements pour lui donner certaines caractéristiques, on comprend par "texturation" dans le cadre de l'invention la modification de l'état de surface d'un objet, notamment pas formation de pores, orifices ou trous de petite taille.

Le moule en oeuvre dans le procédé décrit peut être plein ou creux et varie selon la géométrie de l'implant à fabriquer.

Dans une première variante de réalisation, le dispositif médical implantable étant une prothèse mammaire, le moule mis en oeuvre a une forme hémisphérique, anatomique ou asymétrique et le procédé de fabrication selon l'invention comprend les étapes suivantes :
a) fournir un moule métallique ou en résine de forme hémisphérique, anatomique (reprenant la forme anatomique du sein : poire ou goutte d'eau) ou asymétrique (forme anatomique non symétrique particulièrement indiquées pour les reconstructions mammaires);
b) texturer la surface externe dudit moule par grenaillage avec des particules solides de matière et taille définies, à pression définie;
c) tremper le moule texturé dans une dispersion de silicone médicale afin d'obtenir une enveloppe de silicone;
d) réticuler la silicone sur le moule;
e) démouler et retourner l'enveloppe texturée en silicone;
f) fabriquer un implant mammaire à l'aide de cette enveloppe.

Dans une seconde variante de réalisation, les dispositifs médicaux implantables consistant en des renforts pariétaux, le moule mis en oeuvre a une forme cylindrique et le procédé de fabrication selon l'invention comprend les étapes suivantes :
a) fournir un moule métallique de forme cylindrique ainsi qu'une ligne d'enduction;
b) texturer la surface du cylindre par grenaillage puis procéder à un chromage dur du cylindre texturé;
c) enduire un tricot de polyester de gel de silicone puis presser le dit moule chauffé sur le tricot enduit;
d) réticuler le gel de silicone au contact du moule chaud;
e) démouler le tricot enduit de silicone par rotation du cylindre et avancée de la ligne d'enduction;
f) fabriquer des renforts pariétaux à l'aide du tricot en polyester siliconé et texturé.

Dans une troisième variante de réalisation, le dispositif médical implantable étant un anneau gastrique, le moule mis en oeuvre est creux et le procédé de fabrication selon l'invention comprend les étapes suivantes :
a) fournir un moule métallique creux dont la forme interne (recouverte de téflon) reprend la forme de l'anneau gastrique;
b) texturer la surface interne du moule par grenaillage;
c) injecter à chaud du polyéthylène haute densité dans le moule;
d) laisser le polymère réticuler en se refroidissant;
e) démouler la pièce texturée;
f) fabriquer un anneau gastrique à l'aide de la pièce texturée.

L'invention sera mieux comprise à la lecture de la description détaillée qui va suivre donnée en référence aux dessins annexés dans lesquels :
- la figure 1 est une vue en coupe transversale d'un moule hémisphérique pour la fabrication de prothèses mammaires par le procédé selon l'invention;
- la figure 2 est une vue en perspective d'un cylindre pour la fabrication de renforts pariétaux par le procédé selon l'invention;
- la figure 3 représente de manière schématique la ligne d'enduction, de texturation et de réticulation de polymère dans laquelle intervient le moule de la figure 2;
- la figure 4 est une vue en perspective d'un moule creux pour la fabrication d'anneaux gastriques par le procédé selon l'invention.

L'invention a pour objet un procédé de fabrication d'un dispositif médical implantable en polymère comprenant les étapes suivantes :
a) fournir un moule en un matériau compatible avec l'utilisation médicale, dont une des surfaces est destinée à former la réplique négative dudit dispositif;
b) texturer ladite surface du moule par grenaillage avec des particules solides de matière et taille définies, à pression définie;
c) appliquer un polymère sur la surface texturée dudit moule, par trempage, pressage ou injection;
d) réticuler ledit polymère appliqué sur le moule;
e) démouler le polymère réticulé sont la surface en contact avec le moule a été texturée;
f) fabriquer un dispositif médical implantable à partir dudit polymère réticulé et texturé.

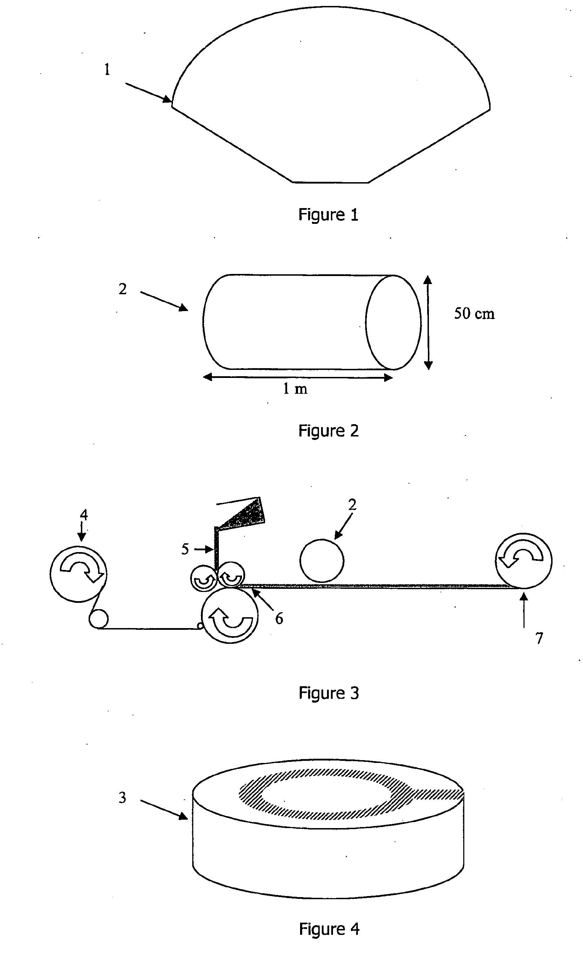

Selon la forme et le type de dispositif médical implantable à fabriquer, le moule mis en oeuvre dans le procédé selon l'invention peut être plein (figures 1 et 2) ou creux (figure 4).

Dans une première variante de réalisation, le dispositif médical implantable étant une prothèse mammaire, le moule mis en oeuvre a une forme hémisphérique (figure 1), anatomique ou asymétrique. Le procédé de fabrication selon l'invention comporte dans ce cas les étapes suivantes :
a) fournir un moule 1 en acier inoxydable médical (Inox 316L) ou en résine biocompatible de forme hémisphérique, anatomique ou asymétrique;
b) texturer la surface externe du moule 1 par grenaillage avec du corindon blanc de 1000-1410 µm à 5 ou 6 bars;
c) tremper le moule 1 dans une dispersion de silicone médicale plusieurs fois avec séchage entre chaque trempage afin d'obtenir une enveloppe de silicone de 450 à 900 µm;
d) réticuler la silicone sur le moule 1 durant deux heures à 150°C;
e) démouler et retourner l'enveloppe en silicone; la partie extérieure de l'enveloppe est texturée car elle a pris l'empreinte de la texturation du moule 1;
f) fabriquer un implant mammaire à l'aide de cette enveloppe.

Dans une seconde variante de réalisation, le dispositif médical implantable consistant en des renforts pariétaux, le moule mis en oeuvre a une forme cylindrique (figure 2). Le procédé de fabrication selon l'invention comporte dans ce cas les étapes suivantes :
a) fournir un moule 2 de forme cylindrique en acier de diamètre 50 cm et de longueur 1m;
b) texturer la surface du cylindre par grenaillage avec du corindon brun de 1410-2000 µm à 4 bars, puis effectuer un chromage dur de 20 µm du cylindre 2, le chromage n'affectant pas la texturation;
c) enduire un tricot de polyester de gel de silicone sur une épaisseur de 150 µm puis presser le moule 2 texturé et chauffé à 80°C sur le tricot enduit (figure 3);
d) le gel de silicone est réticulé au contact du moule chaud (80°C);
e) le tricot enduit de silicone est démoulé par rotation du cylindre et avancée de la ligne d'enduction;
f) fabriquer des renforts pariétaux à l'aide du tricot enduit et texturé.

La ligne d'enduction représentée à la figure 3 comprend, outre le cylindre 2 texturé et chauffé, un dispositif de déroulement 4 du tricot de polyester, un dispositif d'enduction 5 du gel de silicone, un dispositif de calandrage 6 du gel de silicone et un dispositif d'enroulement 7 du tricot de polyester enduit et texturé.

Dans une troisième variante de réalisation, le dispositif médical implantable étant un anneau gastrique, le moule mis en oeuvre est creux (figure 4). Le procédé de fabrication selon l'invention comporte dans ce cas les étapes suivantes :
a) fournir un moule 3 creux en aluminium dont la forme interne reprend la forme de l'anneau gastrique; la partie interne du moule est recouverte de téflon;
b) texturer la surface interne du moule 3 par grenaillage avec une grenaille métallique de 1000 µm à 5 bars;
c) injecter à chaud du polyéthylène haute densité dans le moule 3;
d) laisser le polymère réticuler en refroidissant durant deux heures;
e) démouler la pièce texturée en ouvrant le moule 3;
f) Fabriquer un anneau gastrique à l'aide de la pièce texturée.

Les procédés connus visant à texturer directement la surface de l'implant à l'aide de particules solides projetées dans le polymère non-réticulé ont l'inconvénient majeur d'aboutir à un état de surface du dispositif médical différent d'un dispositif à l'autre, la projection et la pénétration des grains dans le polymère ne pouvant être répétées exactement de la même façon pour chaque dispositif. Le procédé selon l'invention permet un état de surface reproductible à l'identique d'un dispositif à l'autre.

Le procédé selon l'invention est simple à mettre en oeuvre, ne nécessite qu'une seule machine, peut se sous-traiter facilement et est moins onéreux qu'un procédé d'irradiation à l'aide de particules atomiques. Le fait de pouvoir grenailler le moule en dehors de la zone de fabrication du dispositif médical permet de ne pas contaminer la zone de production à atmosphère contrôlée avec les particules solides utilisées pour la texturation directe du dispositif.

## Revendications

1. Procédé de fabrication d'un dispositif médical implantable en polymère comprenant les étapes suivantes :
a) fournir un moule (1,2,3) en un matériau compatible avec l'utilisation médicale, dont une des surfaces est destinée à former la réplique négative dudit dispositif;
b) texturer ladite surface du moule par grenaillage avec des particules solides de matière et taille définies, à pression définie;
c) appliquer un polymère sur la surface texturée dudit moule, par trempage, pressage ou injection;
d) réticuler ledit polymère appliqué sur le moule;
e) démouler le polymère réticulé dont la surface en contact avec le moule a été texturée;
f) fabriquer un dispositif médical implantable à partir dudit polymère réticulé et texturé.

2. Procédé selon la revendication 1, dans lequel le dispositif implantable étant une prothèse mammaire, le procédé de fabrication comprend les étapes suivantes :
a) fournir un moule (1) métallique ou en résine de forme hémisphérique, anatomique ou asymétrique;
b) texturer la surface externe dudit moule (1) par grenaillage avec des particules solides de matière et taille définies, à pression définie;
c) tremper le moule (1) texturé dans une dispersion de silicone médicale afin d'obtenir une enveloppe de silicone;
d) réticuler la silicone sur le moule (1)
e) démouler et retourner l'enveloppe texturée en silicone;
f) fabriquer un implant mammaire à l'aide de cette enveloppe.

3. Procédé selon la revendication 2, dans lequel la texturation du moule (1) est réalisée au moyen de particules de corindon blanc de taille de 1000 à 1410 micromètres.

4. Procédé selon l'une des revendications 2 et 3 dans lequel la texturation du moule (1) est réalisée à une pression de 5 à 6 bars.

5. Procédé selon la revendication 1, dans lequel le dispositif médical implantable consistant en des renforts pariétaux, le procédé de fabrication selon l'invention comprend les étapes suivantes :
a) fournir un moule (2) métallique de forme cylindrique;
b) texturer la surface du moule (2) par grenaillage;
c) enduire un tricot de polyester de gel de silicone puis presser le moule 2 texturé et chauffé sur le tricot enduit;
d) réticuler le gel de silicone au contact du moule chaud;
e) démouler le tricot enduit de silicone par rotation du cylindre et avancée de la ligne d'enduction;
f) fabriquer des renforts pariétaux à l'aide du tricot enduit et texturé.

6. Procédé selon la revendication 5, comportant en outre une étape de chromage dur du moule (2) texturé, effectuée après l'étape de texturation.

7. Procédé selon l'une des revendications 5 et 6 dans lequel la texturation du moule (2) est réalisée au moyen de particules de corindon brun de 1410 à 2000 micromètre.

8. Procédé selon l'une des revendications 5 à 7 dans lequel la texturation du moule (2) est réalisée à une pression de 4 bars.

9. Procédé selon la revendication 1, dans lequel le dispositif médical implantable étant un anneau gastrique, le procédé de fabrication selon l'invention comprend les étapes suivantes :
a) fournir un moule (3) métallique creux dont la forme interne reprend la forme de l'anneau gastrique;
b) texturer la surface interne du moule (3) par grenaillage;
c) injecter à chaud le polyéthylène haute densité dans le moule (3);
d) réticuler le polymère injecté;
e) démouler la pièce texturée;
f) fabriquer un anneau gastrique à l'aide de la pièce texturée.

10. Procédé selon la revendication 9 dans lequel la texturation du moule (3) est réalisée au moyen d'une grenaille métallique de 1000 micromètres.

11. Procédé selon l'une des revendications 9 et 10 dans lequel la texturation du moule (3) est réalisée à une pression de 5 bars.

12. Procédé selon la revendication 9 dans lequel le moule (3) est recouvert de téflon.

## Claims

1. A method for the manufacture of an implantable medical device in polymer that includes the following stages:
a) to supply a mould (1,2,3) in a material that is compatible with medical use, of which one of the surfaces is intended to form the negative replica of the said device;
b) to texture the said surface of the mould by shotblasting with solid particles of a given material and size, at given pressure;
c) to apply a polymer onto the textured surface of the said mould, by soaking, pressing or injection;
d) to reticulate the said polymer applied to the mould;
e) to de-mould the reticulated polymer, of which the surface in contact with the mould has been textured;
f) to manufacture an implantable medical device from the said reticulated and textured polymer.

2. A method according to claim 1 in which, with the implantable device being a mammary prosthesis, the method of manufacture includes the following stages:
a) to supply a mould (1), in metal or in resin, of hemispherical, anatomical or asymmetric shape;
b) to texture the external surface of the said mould (1) by shotblasting with solid particles of a given material and size, at given pressure;
c) to soak the textured mould (1) in a dispersion of medical silicone in order to obtain a silicone envelope;
d) to reticulate the silicone on the mould (1);
e) to de-mould and reverse the textured silicone envelope;
f) to manufacture a mammary implant by means of this envelope.

3. A method according to claim 2, in which the texturing of the mould (1) is effected by means of particles of white corundum, 1000 to 1410 micrometres in size.

4. A method according to one of claims 2 and 3, in which the texturing of the mould (1) is effected at a pressure of 5 to 6 bars.

5. A method according to claim 1 in which, with the implantable medical device consisting of parietal reinforcements, the method of manufacture according to the invention includes the following stages:
a) to supply a metal mould (2) of cylindrical shape;
b) to texture the surface of the mould (2) by shotblasting;
c) to coat a polyester fabric with a silicone gel and then to press the textured and heated mould (2) on the coated fabric;
d) to reticulate the silicone gel in contact with the hot mould;
e) to de-mould the coated silicone fabric by rotation of the cylinder and forward motion of the coating line;
f) to manufacture parietal reinforcements by means of the coated and textured fabric.

6. A method according to claim 5, that also includes a stage for hard chroming of the textured mould (2), effected after the texturing stage.

7. A method according to one of claims 5 and 6, in which the texturing of the mould (2) is effected by means of particles of brown corundum, 1410 to 2000 micrometres in size.

8. A method according to one of claim 5 to 7 in which the texturing of the mould (2) is effected at a pressure of 4 bars.

9. A method according to claim 1 in which, with the implantable medical device being a gastric band, the method of manufacture according to the invention includes the following stages:
a) to supply a hollow metal mould (3) of which the internal shape copies the shape of the gastric band;
b) to texture the internal surface of the mould (3) by shotblasting;
c) to hot-inject the high-density polyethylene into the mould (3);
d) to reticulate the injected polymer;
e) to de-mould the textured part;
f) to manufacture a gastric band by means of the textures part.

10. A method according to claim 9 in which the texturing of the mould (3) is effected by means of metal blasting shot measuring 1000 micrometres.

11. A method according to one of claims 9 and 10, in which the texturing of the mould (3) is effected at a pressure of 5 bars.

12. A method according to claim 9 in which the mould (3) is covered with Teflon.

## Patentansprüche

1. Verfahren zur Herstellung einer implantierbaren medizinischen Vorrichtung aus Polymer, das die folgenden Schritte umfaßt:
a) Bereitstellen einer Form (1, 2, 3) aus einem mit der medizinischen Verwendung kompatiblen Material, deren eine Fläche dazu bestimmt ist, den Negativabdruck der Vorrichtung zu bilden,
b) Texturieren der genannten Fläche der Form durch Strahlen mit festen Teilchen aus bestimmtem Material und mit bestimmter Größe, bei festgelegtem Druck,
c) Aufbringen eines Polymers auf die texturierte Fläche der Form durch Eintauchen, Pressen oder Spritzen,
d) Vernetzen des auf die Form aufgebrachten Polymers,
e) Ausformen des vernetzten Polymers, dessen mit der Form in Kontakt befindliche Fläche texturiert worden ist,
f) Herstellen einer implantierbaren medizinischen Vorrichtung aus dem vernetzten und texturierten Polymer.

2. Verfahren nach Anspruch 1, bei dem, wenn die implantierbare Vorrichtung eine Brustprothese ist, das Herstellungsverfahren die folgenden Schritte umfaßt:
a) Bereitstellen einer halbkugelförmigen, anatomischen oder asymmetrischen Metall- oder Harzform (1),
b) Texturieren der Außenfläche der Form (1) durch Strahlen mit festen Teilchen aus bestimmtem Material und mit bestimmter Größe, bei festgelegtem Druck,
c) Eintauchen der texturierten Form (1) in eine Dispersion aus medizinischem Silikon, um eine Silikonhülle zu erhalten,
d) Vernetzen des Silikons an der Form (1),
e) Ausformen und Wenden der texturierten Silikonhülle,
f) Herstellen eines Brustimplantats mittels dieser Hülle.

3. Verfahren nach Anspruch 2, bei dem die Texturierung der Form (1) mittels Teilchen aus weißem Korund mit einer Größe zwischen 1000 und 1410 Mikrometern durchgeführt wird.

4. Verfahren nach einem der Ansprüche 2 und 3, bei dem die Texturierung der Form (1) bei einem Druck zwischen 5 und 6 bar durchgeführt wird.

5. Verfahren nach Anspruch 1, bei dem, wenn die implantierbare medizinische Vorrichtung aus Gewebewandverstärkungen besteht, das erfindungsgemäße Herstellungsverfahren die folgenden Schritte umfaßt:
a) Bereitstellen einer zylinderförmigen Metallform (1),
b) Texturieren der Oberfläche der Form (2) durch Strahlen,
c) Beschichten eines Polyestergewirks mit Silikongel, anschließend Aufpressen der texturierten und erhitzten Form (2) auf das beschichtete Gewirk,
d) Vernetzen des Silikongels bei Kontakt mit der heißen Form,
e) Ausformen des mit Silikon beschichteten Gewirks durch Rotation des Zylinders und Vorschub der Beschichtungsanlage,
f) Herstellen von Gewebewandverstärkungen mit Hilfe des beschichteten und texturierten Gewirks.

6. Verfahren nach Anspruch 5, das ferner einen Schritt zum Hartverchromen der texturierten Form (2) umfaßt, der nach dem Schritt des Texturierens durchgeführt wird.

7. Verfahren nach einem der Ansprüche 5 und 6, bei dem das Texturieren der Form (2) mit Hilfe von Teilchen aus braunem Korund mit einer Größe zwischen 1410 und 2000 Mikrometern durchgeführt wird.

8. Verfahren nach einem der Ansprüche 5 bis 7, bei dem das Texturieren der Form (2) bei einem Druck von 4 bar durchgeführt wird.

9. Verfahren nach Anspruch 1, bei dem, wenn die implantierbare medizinische Vorrichtung ein Magenring ist, das erfindungsgemäße Herstellungsverfahren die folgenden Schritte umfaßt:
a) Bereitstellen einer hohlen Metallform (3), deren Innenform die Form des Magenrings annimmt,
b) Texturieren der Innenfläche der Form (3) durch Strahlen,
c) Einspritzen des Hartpolyethylens unter Wärme in die Form (3),
d) Vernetzen des eingespritzten Polymers,
e) Ausformen des texturierten Teils,
f) Herstellen eines Magenrings mit Hilfe des texturierten Teils.

10. Verfahren nach Anspruch 9, bei dem das Texturieren der Form (3) mittels eines metallischen Strahlmittels mit einer Größe von 1000 Mikrometern durchgeführt wird.

11. Verfahren nach einem der Ansprüche 9 und 10, bei dem das Texturieren der Form (3) bei einem Druck von 5 bar durchgeführt wird.

12. Verfahren nach Anspruch 9, bei dem die Form (3) mit Teflon überzogen ist.
